# EUROPÄISCHE PATENTSCHRIFT

(11) **EP 1 930 204 B1**
(45) Veröffentlichungstag und Bekanntmachung des Hinweises auf die Patenterteilung: **04.09.2013**
(21) Anmeldenummer: 07018890.9
(22) Anmeldetag: 26.09.2007
(51) Int. Cl.: B60N 2/07

(54) **Längsverstelleinheit für Sitze, insbesondere in Kraftfahrzeugen**
Longitudinal adjustable unit for seats, in particular in motor vehicles
Unité de réglage en longueur pour sièges, en particulier dans des véhicules automobiles

(30) Priorität: 08.11.2006 DE 102006052936
(43) Veröffentlichungstag der Anmeldung: 11.06.2008
(73) Patentinhaber: IMS Gear GmbH, 78166 Donaueschingen (DE)
(72) Erfinder: Hofschulte, Wolfram, 79848 Bonndorf (DE); Krimmel, Fred, 72458 Albstadt (DE); Lohner, Rolf-Dieter, 78050 Villingen-Schwenningen (DE)
(74) Vertreter: Göhring, Robert

(56) Entgegenhaltungen:
- EP-A1- 0 652 133
- WO-A1-95/16585
- WO-A1-2005/053997
- DE-A1- 3 640 197
- DE-A1- 4 208 948
- DE-A1- 10 250 994
- DE-A1- 10 358 589
- DE-A1- 19 815 283
- DE-A1- 19 844 817
- DE-A1-102006 011 718
- FR-A1- 2 872 747
- GB-A- 2 226 238
- GB-A- 2 404 704

## Beschreibung

Längsverstelleinheit für Sitze, insbesondere in Kraftfahrzeugen.

Die Erfindung betrifft eine Längsverstelleinheit für Sitze, insbesondere in Kraftfahrzeugen, gemäß den Merkmalen des Oberbegriffs des Anspruchs 1. DE 10 2006 011 718 wird als nächstliegender Stand der Technik betrachtet.

Solche Sitzlängsverstellungen sind zwischenzeitlich hinlänglich bekannt. Die Sitzlängsverstellungen weisen eine an einem Chassis festgelegte Unterschiene auf, innerhalb der eine Oberschiene, an der der Sitz befestigt ist, motorisch verfahrbar ist. Hierbei sitzt innerhalb der Oberschiene eine an der Unterschiene mit ihren jeweiligen Enden festgelegte Spindel, auf welcher ein mit der Oberschiene feststehend gekoppeltes Getriebe axial beweglich angeordnet ist. Der Sitz, der sich auf den beiden parallel zueinander angeordneten Oberschienen befindet, kann über eine motorische Einrichtung verfahren werden.

Beispiele für Einrichtungen zu Sitzlängsverstellungen sind in DE 36 40 197 A1, DE 42 08 948 C2, DE 196 42 655 C2, DE 198 15 283 A1, DE 198 44 817 A1, DE 199 44 690 A1 und WO 95/16 585 beschrieben worden.

Der Erfindung liegt die Aufgabe zugrunde, eine kompakte Sitzlängsverstellungseinrichtung anzugeben, bei der nur wenige Bauteile notwendig sind und welche sehr einfach hergestellt werden kann.

Diese Aufgabe wird durch eine Längsverstelleinheit mit den Merkmalen des Anspruchs 1 gelöst.

Weiterbildungen der Erfindung sind Gegenstand der Unteransprüche.

Die Erfindung wird im Folgenden anhand eines Ausführungsbeispiels im Zusammenhang mit Figuren näher erläutert. Es zeigen:
- Figur 1: eine Explosionsdarstellung einer erfindungsgemäßen Längsverstelleinheit für Sitze,
- Figur 2: die Längsverstelleinheit von Figur 1 im zusammengebauten Zustand,
- Figur 3: ein erstes Gehäuseteil der Längsverstelleinheit von Figur 1 bzw. Figur 2 mit eingesetzter Spindelmutter sowie Schnecke,
- Figur 4: das Gehäuse der Längsverstelleinheit gemäß Figur 1 bzw. Figur 2 mit den beiden aneinander gefügten Gehäuseteilen und darin sitzender Schnecke und Spindelmutter,
- Figur 5: einen Längsschnitt durch die Längsverstelleinheit von Figur 2 entlang der Schnittlinien V-V,
- Figur 6: ein Detail des in Figur 1 dargestellten Steges des zweiten Gehäuseteils im Bereich der Aufnahme der Schnecke,
- Figur 7: ein Detail der Schnittansicht von Figur 5 im Bereich des U-förmigen Haltebügels mit den Stütznasen,
- Figur 8: das erste Gehäuseteil gemäß Figur 3 in alleiniger, perspektivischer Ansicht,
- Figur 9: das zweite Gehäuseteil gemäß Figur 1 in alleiniger, perspektivischer Ansicht,
- Figur 10: ein anderes Beispiel einer ersten Gehäusehälfte in alleiniger, perspektivischer Ansicht, und
- Figur 11: ein anderes Beispiel einer zweiten Gehäusehälfte in perspektivischer Ansicht.

In den nachfolgenden Figuren bezeichnen, sofern nicht anders angegeben, gleiche Bezugszeichen gleiche Teile mit gleicher Bedeutung.

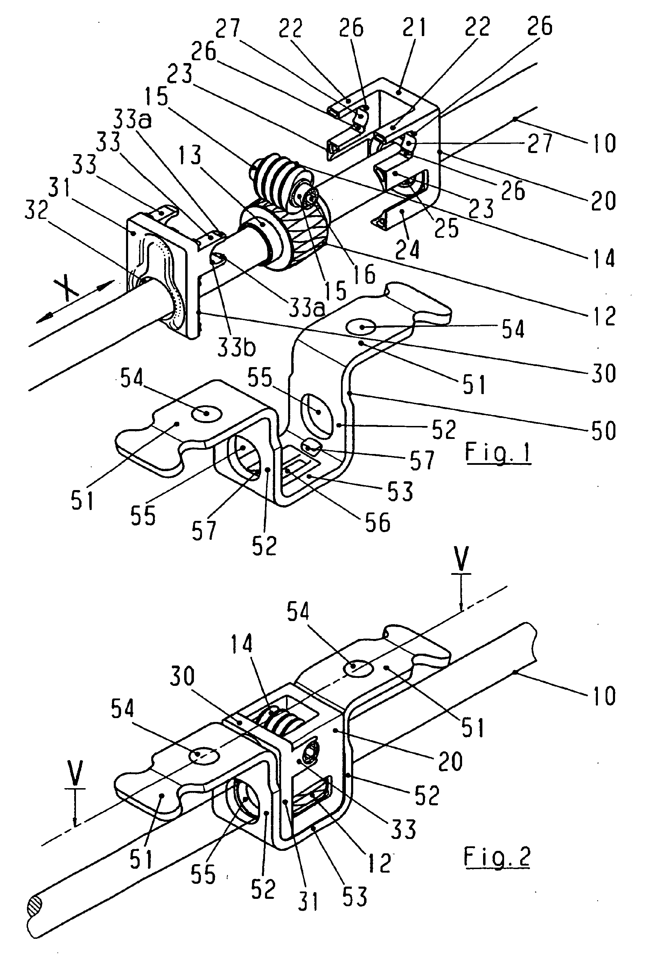

In den Figuren 1 und 2 ist eine Längsverstelleinheit für Sitze, insbesondere Kraftfahrzeugsitze, dargestellt. Figur 1 zeigt die Längsverstelleinheit in Explosionsdarstellung und Figur 2 im zusammengebauten Zustand.

Die Anordnung weist eine Spindel 10 auf, auf welcher eine Spindelmutter 12 sitzt, die von einer Schnecke 14 angetrieben werden kann, wodurch sich die Spindelmutter 12 auf der Spindel 10 entlang bewegt. Sowohl die Spindelmutter 12 als auch die Schnecke 14 weisen Lagerbunde zur Lagerung der Spindel 10 und der Schnecke 14 in einem aus zwei Gehäuseteilen 20, 30 bestehenden Gehäuse auf. Die Lagerbunde der Spindelmutter 12 sind mit den Bezugszeichen 13 und die Lagerbunde der Schnecke 14 mit den Bezugszeichen 15 bezeichnet. Sowohl die Spindelmutter 12 als auch die Schnecke 14 weisen an ihren beiden distalen Enden jeweils zwei solcher Lagerbunde 13, 15 auf, um in den Gehäuseteilen 20, 30 des Gehäuses gelagert zu werden.

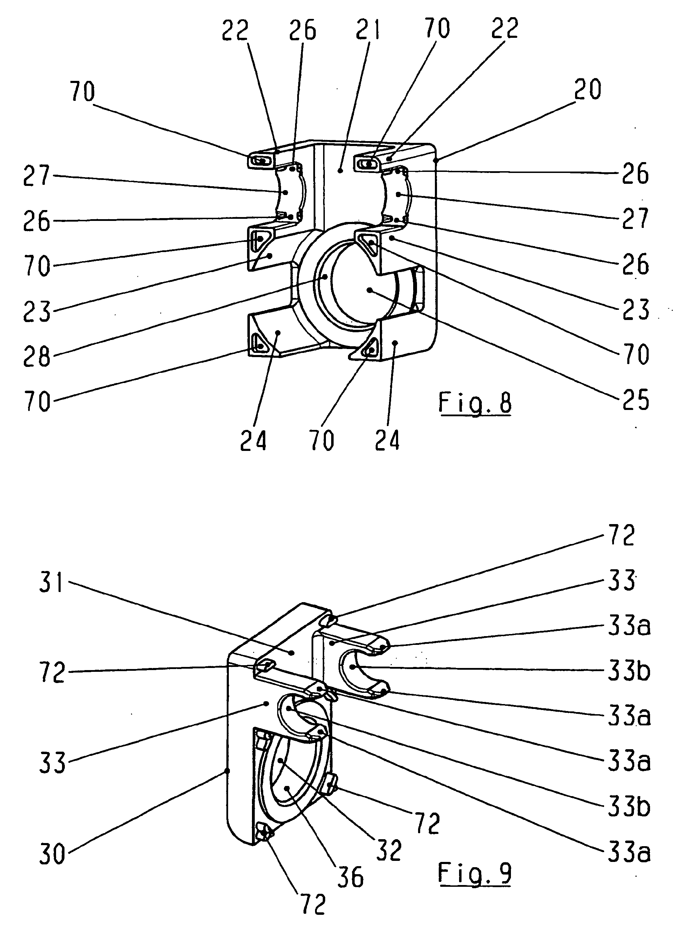

Die beiden Gehäuseteile 20, 30 bestehen aus Kunststoff. Vorzugsweise ist dies ein gleitmodifizierter Kunststoff, insbesondere Silikon oder Teflon (eingetragene Marke). Die beiden Gehäuseteile 20, 30 sind in den Figuren 8 und 9 vergrößert und in perspektivischer Ansicht in ihren Einzelheiten gezeigt. Das Gehäuseteil 20 (vgl. hierzu auch Figur 8) verfügt über eine annähernd rechteckförmige Platte 21, an deren beiden oberen Ecken sich obere Stege 22 in gleiche Richtung zum Betrachter von Figur 8 wegerstrecken. Auf etwa halber Höhe der Platte 21 erstrecken sich in die gleiche Richtung zwei mittlere Stege 23. An den unteren beiden Ecken der Platte 21 des Gehäuseteils 20 erstrecken sich zusätzlich zwei untere Stege 24 in Richtung des Betrachters von Figur 8. An den jeweils stirnseitigen Enden der beiden oberen Stege 22, der beiden mittleren Stege 23 und der beiden unteren Stege 24 sind Öffnungen 70 eingearbeitet, um eine Nut-Federverbindung zu ermöglichen. In diese Öffnungen 70 werden entsprechende Vorsprünge bzw. Federn 72 des zweiten Gehäuseteils 30 eingesteckt. Damit ist eine exakte und saubere Positionierung der beiden Gehäuseteile 20, 30 möglich.

Zwischen dem oberen Steg 22 und dem mittleren Steg 23 befindet sich sowohl an der linken als auch rechten Seitenwandung des Gehäuses 20 eine bogen- bzw. kreisförmige Öffnung 27, wobei sich diese bogen- bzw. kreisförmig berandete Öffnung 27 am Rand des oberen Steges 22 bzw. Rand des mittleren Steges 23 in Richtung der Platte 21 des Gehäuseteils 20 mit einem vertiefenden Endkeil 26 fortsetzt. Im Gegensatz hierzu ist die Ausnehmung zwischen dem mittleren Steg 23 und dem unteren Steg 24 in etwa rechteckförmig gestaltet.

Zusätzlich verfügt das Gehäuseteil 20 über eine Öffnung 25 in der unteren Hälfte der Platte 21. Durch diese Öffnung 25 wird die Spindel 10 der Längsverstelleinheit gesteckt. An der kreisförmigen Umrandung 28 dieser Öffnung 25 liegt im zusammengebauten Zustand der Längsverstelleinheit der Lagerbund 13 der Spindelmutter 12 auf.

Das zweite Gehäuseteil 30 ist in der perspektivischen Ansicht von Figur 9 besonders gut zu erkennen. Dieses zweite Gehäuseteil 30 weist wiederum eine Platte 31 auf. Diese Platte 31 hat in der unteren Hälfte eine Öffnung 32 mit einer kreisförmigen Umrandung 36, an der der andere Lagerbund 13 der Spindelmutter 12 aufliegen kann. In der oberen Hälfte der Platte 31 des zweiten Gehäuseteils 30 erstrecken sich vom Rand der Platte 31 zwei Stege 33 in gleiche Richtung hervor. An den der Platte 31 des Gehäuseteils 30 abgewandten Enden der beiden Stege 33 ist eine kreisförmige Ausnehmung 33b in die Stege 33 eingearbeitet. Diese kreisförmige Ausnehmung 33b bildet zusammen mit der bogen- bzw. kreisförmigen Ausnehmung 27 des ersten Gehäuseteils 20 einen Vollkreis mit vorzugsweise gleichem Radius. Die sich durch die Einarbeitung der kreisförmigen Ausnehmung 33b in die Stege 33 gebildeten Enden sind als Endkeile 33a ausgebildet und verjüngen sich. Diese Endkeile 33a sind zum Einsetzen in die Endkeilöffnungen 26 des ersten Gehäuseteils 20 vorgesehen. Zusätzlich verfügt das zweite Gehäuseteil 30 über die bereits erwähnten Vorsprünge bzw. Federn 72, welche in die Ausnehmungen bzw. Nuten 70 des ersten Gehäuseteils 20 eingreifen. Hierfür sind an den jeweiligen Enden der Platte 31 Federn bzw. Vorsprünge 72 vorgesehen. Zwei weitere Vorsprünge bzw. Federn 72 sind auf halber Höhe am Rand der Platte 31 angeordnet.

Die derartig ausgebildeten ersten und zweiten Gehäuseteile 20, 30 können in einfacher Weise durch die Nut-Federverbindung mit den Nuten 70 am ersten Gehäuseteil 20 und den Federn 72 am zweiten Gehäuseteil 30 ineinander gesteckt werden. Mit der erwähnten Nut-Federverbindung sind beide Gehäusehälften 20, 30 beim Ineinanderstecken mit einer hohen Genauigkeit zentriert, und zwar in zwei Raumrichtungen. Die beiden Gehäuseteile 20, 30 werden dauerhaft miteinander verbunden, beispielsweise durch Ultraschallschweißen, Laserschweißen oder durch Kleben. Es ist durchaus möglich, beide Gehäuseteile mit einer Klemm-oder Schnappverbindung miteinander zu verbinden. Dabei kann auch dafür gesorgt werden, dass die beiden Gehäuseteile nur äußert schwer voneinander getrennt werden können, möglicherweise nur durch Zerstörung der beiden Gehäuseteile 20, 30.

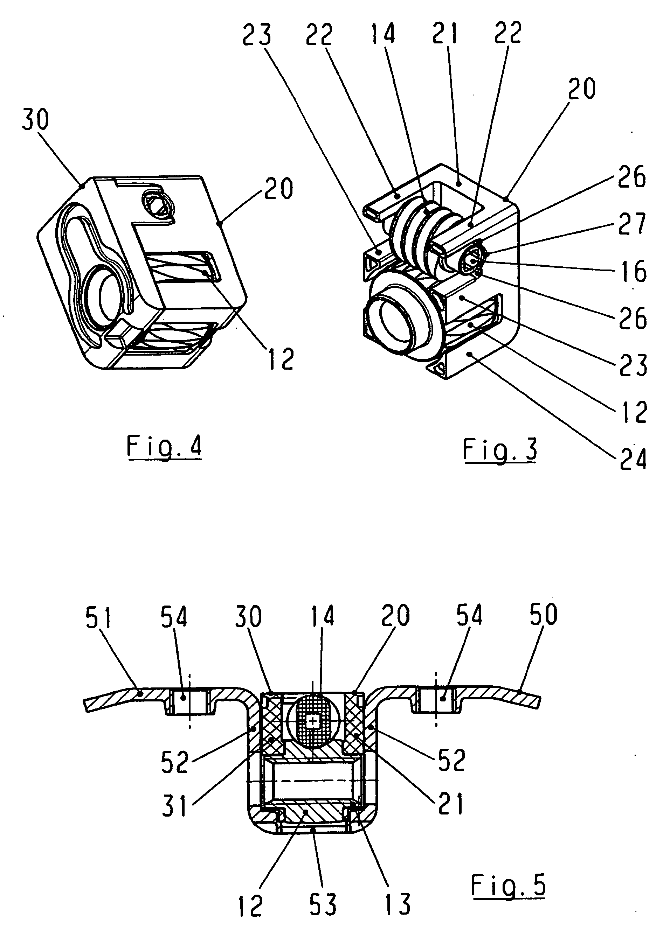

In Figur 3 ist das erste Gehäuseteil 20 mit eingesetzter Spindelmutter 12 und Schnecke 14 dargestellt. In Figur 4 ist das zweite Gehäuseteil 30 auf das erste Gehäuseteil 20, in dem die Spindelmutter 12 und Schnecke 14 bereits sitzen, aufgesteckt.

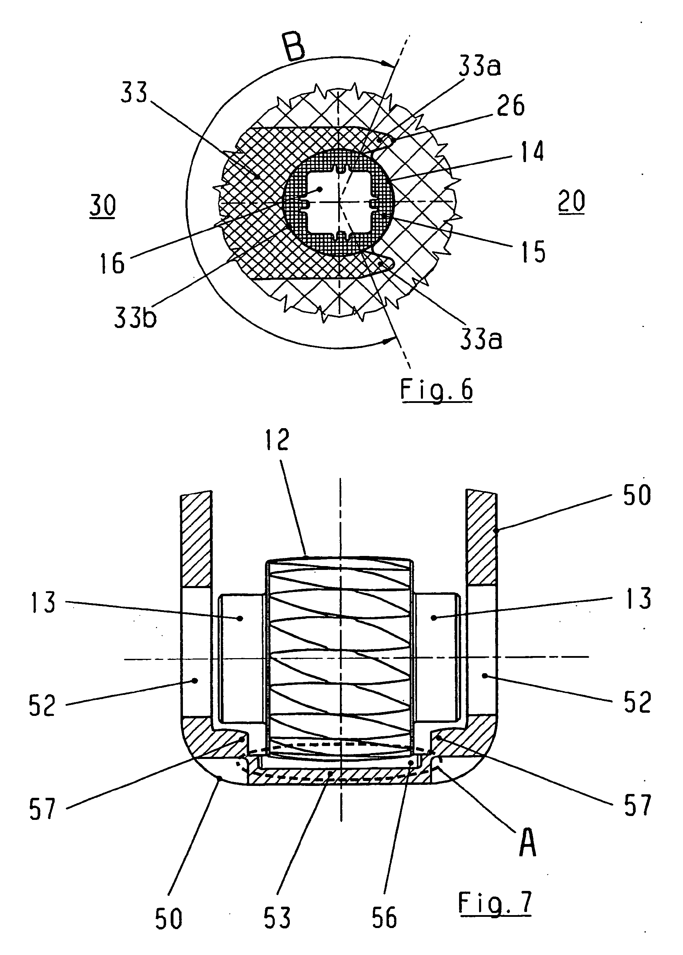

In Figur 6 ist der Bereich der beiden Gehäuseteile 20, 30 ausschnittsweise vergrößert und im Schnitt dargestellt, wo die Schnecke 14 mit ihrem Lagerbund 15 sitzt. Der Steg 33 des zweiten Gehäuseteils 30 ist mit seiner kreisförmigen Ausnehmung 33b deutlich zu erkennen, ebenfalls die distal spitz zulaufenden Endkeile 33a. Diese Endkeile 33a des zweiten Gehäuseteils 30 sitzen in den Endkeilöffnungen 26 des ersten Gehäuseteils 20. Zwischen den beiden Endkeilöffnungen 26 ist die bogen- bzw. kreisförmige Wandung 27 des ersten Gehäuseteils 20 erkennbar. Der Radius der kreisförmigen Ausnehmung 33b und der kreisförmigen Öffnung 27 ist gleich und entspricht etwa dem Radius des Lagerbundes 15 der Schnecke 14. Wie aus Figur 6 besonders gut erkennbar, umgreift die kreisförmige Ausnehmung 33b den Lagerbund 15 der Schnecke 14 um mehr als 180° in einem Winkel B. In Figur 6 beträgt der Winkel etwa 220°. Dementsprechend ist der Winkel, mit dem die bogenförmige Öffnung 27 den Lagerbund 15 der Schnecke 14 umgreift, deutlich kleiner, hier etwa 100°. Ein derartiger Umschlingungswinkel der kreisförmigen Ausnehmung 33b von größer 180° hat den Vorteil, dass die Schnecke 14 verliersicher in der Gehäusehälfte 30 vormontiert werden kann.

Wie aus Figur 6 zu erkennen, verfügt die Schnecke über eine durchgängige Vierkantöffnung, so dass die ganze Längsverstelleinheit von beiden Seiten der Schnecke her angetrieben werden kann.

Die gemäß Figur 4 zusammengesteckten Gehäuseteile 20, 30 mit darin eingesetzter Spindelmutter 12 und Schnecke 14 werden gemäß Figur 1 und Figur 2 in einen U-förmigen Haltebügel 50 eingesetzt. Der Haltebügel 50 wird aus einem gestanzten Metallstreifen U-förmig gebogen und verfügt über zwei obere, waagerechte Schenkel 51, an welche sich jeweils ein senkrechter U-Schenkel 52 anschließt, wobei diese beiden senkrechten U-Schenkel 52 durch einen unteren waagerechten U-Schenkel 53 miteinander in Verbindung sind. Die beiden oberen waagerechten Schenkel 51 weisen jeweils ein Befestigungsloch 54 auf. Durch diese Befestigungslöcher 54 ist die Längsverstelleinheit an der Unterseite eines Sitzes befestigbar. In den beiden senkrechten U-Schenkeln 52 sind Öffnungen 55 zum Durchführen der Spindel 10 eingearbeitet. Der untere waagerechte U-Schenkel 53 verfügt über eine Öffnung 56, durch welche die Spindelmutter 12 ragen kann, so dass sich ein insgesamt geringer Bauraum bzw. eine geringe Bauhöhe der gesamten Anordnung ergibt. Anstelle einer Öffnung oder Aussparung 56 kann in den unteren waagerechten U-Schenkel 53 auch lediglich eine Ausnehmung eingearbeitet sein, die die Dicke der Wandung des unteren waagerechten U-Schenkels 53 vermindert. Auch hierdurch kann die Spindelmutter 12 etwas in den unteren waagerechten U-Schenkel 53 eintauchen.

Besonders vorteilhaft ist, wenn die Spindelmutter 12 eine ballige Außenkontur aufweist. Zusätzlich verfügt der Haltebügel 50 über Stütznasen 57, die am Übergang zwischen dem senkrechten U-Schenkel 52 und dem unteren waagerechten U-Schenkel 53 etwa in der Mitte des Haltebügels 50 sitzen. Diese Stütznasen 57 dienen dazu, den stirnseitigen Rand der Spindelmutter 12 wirksam abzustützen. Im Crashfall hindern diese Stütznasen 57 die Spindelmutter 12 an einer Verschiebung in Richtung der Spindelachse 10. Hierdurch wird die Crashsicherheit erhöht. Neben separaten Stütznasen 57 können solche Stütznasen auch dadurch gebildet sein, dass entsprechende Einprägungen in das Material des Haltebügels 50 eingearbeitet wird. Durch Einbringung solcher Stütznasen 57 bzw. Einprägungen im Bereich des Übergangs zwischen den senkrechten Schenkeln 52 und dem unteren waagerechten Schenkel 53 wird darüber hinaus die Biegefestigkeit des gesamten Haltebügels 50 deutlich erhöht.

Figur 2 zeigt den Haltebügel 50 mit eingesetzten Gehäuseteilen 20, 30 sowie Schnecke 14 und Spindelmutter 12. Figur 5 ist die zugehörende Schnittansicht entlang der Schnittebene V-V von Figur 2.

Figur 7 zeigt die in den Haltebügel 50 eingesetzte ballige Spindelmutter 12 mit ihren Lagerbunden 13. Der besseren Übersichtlichkeit wegen sind die Gehäuseteile 20, 30 in Figur 7 weggelassen. Es sind deutlich die an den Übergängen von dem senkrechten U-Schenkel 52 zum waagerechten U-Schenkel 53 vorgesehenen Stütznasen 57 erkennbar. Zusätzlich ist erkennbar, wie die ballige Außenkontur 12 der Spindelmutter 12 in einem Eintauchbereich A in die Aussparung 56 des unteren waagerechten U-Schenkels 53 eintaucht.

Die ballige Ausführung der Spindelmutter 12 bzw. die ballige Ausführung der Schneckenradverzahnung der Spindelmutter führt zu einer kürzeren Baulänge der Spindelmutter 12, was ebenfalls den gesamten Bauraum der Längsverstelleinheit reduzieren hilft.

Durch das direkte Aufsetzen der Lagerbunde 15 der Schnecke 14 bzw. der Lagerbunde 13 der Spindelmutter 12 in die Umrandungen 36 der Öffnung 32 des zweiten Gehäuseteils 30 bzw. der Umrandung 28 der Öffnung 25 des ersten Gehäuseteils 20 sowie in den kreisförmigen Öffnungen 33b und 27 werden die Schnecke 14 und die Spindelmutter 12 direkt und unmittelbar gelagert. Dadurch können zusätzliche Lagerbauteile, wie z. B. Scheiben und Buchsen, entfallen. Eine Verringerung der Anzahl der notwendigen Bauteile der Längsverstelleinheit ist die Folge.

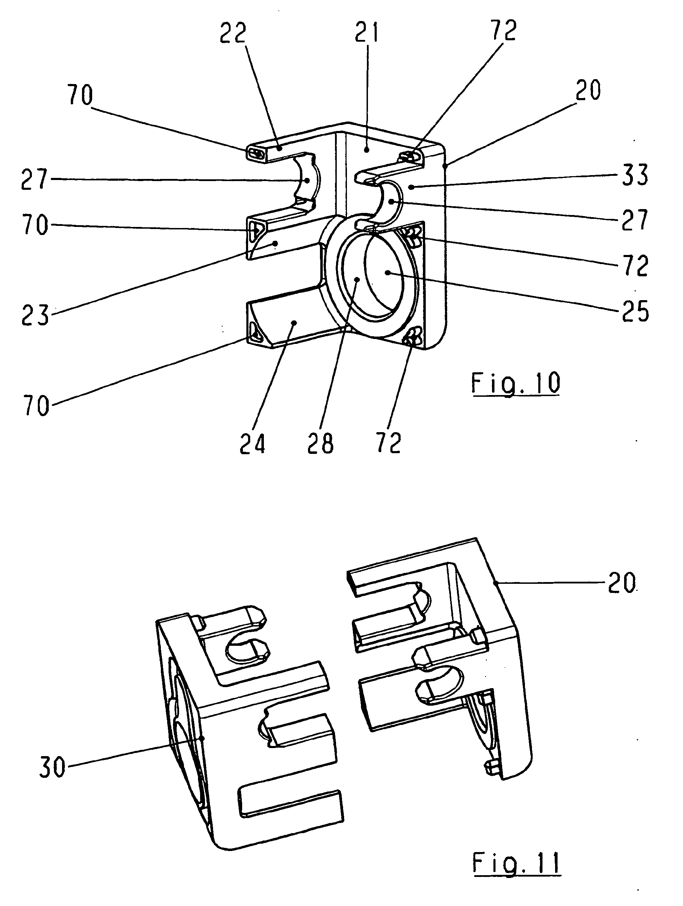

Obwohl im Zusammenhang mit den Figuren 1 bis 9 Gehäuseteile 20, 30 erläutert wurden, die unterschiedlich aussehen, liegt es im Rahmen der vorliegenden Erfindung zwei Gehäuseteile 20, 30 bereitzustellen, die identisch ausgebildet sind. Solche identisch ausgebildeten Gehäuseteile zeigen die Figuren 10 und 11. Der Vorteil solcher identisch ausgebildeten Gehäuseteile liegt insbesondere darin, dass lediglich ein einziges Spritzgusswerkzeug benötigt wird, um die beiden Gehäuseteile 20, 30 zu fertigen.

Das in Figur 10 dargestellte Gehäuseteil 20 unterscheidet sich von dem zuvor vorgestellten ersten Gehäuseteil 20 dadurch, dass lediglich an dem linken Rand der Platte 21 (vgl. hierzu Figur 10) der erwähnte obere Steg 22, mittlere Steg 23 und untere Steg 24 angeordnet ist. Am rechten Rand der Platte 21 befindet sich dagegen ein Steg, welcher dem im Zusammenhang mit dem zweiten Gehäuseteil 30 entsprechenden Steg 33 entspricht. Ebenfalls sind am rechten Rand der Platte 21 die Federn 72 bzw. Vorsprünge, wie diese im Zusammenhang des zweiten Gehäuseteils 30 erläutert wurden, vorhanden.

Figur 11 zeigt zwei solche identische Gehäuseteile 20, 30, wobei für einen Zusammenbau lediglich eines dieser Gehäuseteile für ein Zusammenstecken um 180° umgedreht werden muss.

Insgesamt zeichnet sich die erfindungsgemäße Längsverstelleinheit durch einen sehr kleinen, kompakten Aufbau aus. Zudem können Spindel 10 mit einem Durchmesser von größer gleich 8 mm verbaut werden, was bisher nicht der Fall ist.

Dies liegt insbesondere daran, dass Spindelmutter 12 und Schnecke 14 ohne separate Lagerbauteile im Gehäuse gehalten sind.

### Bezugszeichenliste

- 10: Spindel
- 12: Spindelmutter
- 13: Lagerbund der Spindelmutter
- 14: Schnecke
- 15: Lagerbund der Schnecke
- 16: Vierkantöffnung
- 20: erstes Gehäuseteil
- 21: Platte
- 22: oberer Steg
- 23: mittlerer Steg
- 24: unterer Steg
- 25: Öffnung
- 26: Endkeilöffnung
- 27: kreisförmige Öffnung
- 28: kreisförmige Umrandung
- 30: zweites Gehäuseteil
- 31: Platte
- 32: Öffnung
- 33: Steg
- 33a: Endkeil
- 33b: kreisförmige Ausnehmung
- 36: kreisförmige Umrandung
- 50: Haltebügel
- 51: waagerechter Schenkel
- 52: senkrechter U-Schenkel
- 53: waagerechter U-Schenkel
- 54: Befestigungsloch
- 55: Öffnung für Spindel
- 56: Aussparung für Spindelmutter
- 57: Stütznasen
- 70: Nuten
- 72: Federn

- A: Eintauchbereich
- B: Winkel
- X: Achsrichtung der Spindel

- V-V: Schnittlinie

## Patentansprüche

1. Längsverstelleinheit für einen Sitz, insbesondere in einem Kraftfahrzeug, mit einer auf einer Spindel (10) verfahrbaren Spindelmutter (12), welche von einer Schnecke (14) mit beidseitigem Lagerbund (15) antreibbar ist, sowie mit einem die Schnecke (14) und Spindel (10) aufnehmenden, mehrteiligen Gehäuse (20, 30),
**dadurch gekennzeichnet, dass**
- das Gehäuse (20, 30) zwei aus Kunststoff bestehende Gehäuseteile (20, 30) aufweist, welche in Achsrichtung (X) der Spindel (10) ineinander steckbar sind, und
- jedes Gehäuseteil (20, 30) eine Platte (21, 31) aufweist, aus der Stege (22, 23, 24; 33) einseitig hervorspringen, wobei mindestens eines der Gehäuseteile (30) mindestens einen hervorspringenden Steg (33) aufweist, der einen Lagerbund (15) der Schnecke (14) um mehr als 180° umgreift.

2. Längsverstelleinheit nach Anspruch 1;
**dadurch gekennzeichnet, dass** die Gehäuseteile (20, 30) dauerhaft miteinander verbunden sind.

3. Längsverstelleinheit nach Anspruch 1,
**dadurch gekennzeichnet, dass** der den mindestens einen Lagerbund (15) der Schnecke (14) umgreifenden Steg (33) eine bogenförmige Ausnehmung (33b) aufweist, deren Bogenumfang größer 180° ist, wobei die Ausnehmung (33b) in gegenüberliegenden Endkeilen (33a) ausläuft.

4. Längsverstelleinheit nach Anspruch 3,
**dadurch gekennzeichnet, dass** die Stege (33) des einen Gehäuseteils (30) in entsprechenden Endkeilöffnungen (26) und kreisförmigen Öffnungen (27) des anderen Gehäuseteils (20) eingreifen.

5. Längsverstelleinheit nach einem der Ansprüche 1 bis 4,
**dadurch gekennzeichnet, dass** die beiden Gehäuseteile (20, 30) durch Ultraschallschweißen oder Laserschweißen miteinander verbunden sind.

6. Längsverstelleinheit nach einem der Ansprüche 1 bis 5,
**dadurch gekennzeichnet, dass** die beiden Gehäuseteile (20, 30) durch eine Klemm- oder Schnappverbindung miteinander verbunden sind.

7. Längsverstelleinheit nach einem der Ansprüche 1 bis 6,
**dadurch gekennzeichnet, dass** die beiden Gehäuseteile (20, 30) durch Kleben miteinander verbunden sind.

8. Längsverstelleinheit nach einem der Ansprüche 1 bis 7,
**dadurch gekennzeichnet, dass** das Gehäuse mit den beiden Gehäuseteilen (20, 30) und darin befindlicher Schnecke (14) und Spindel (10) in einem U-förmigen Haltebügel (50) sitzt.

9. Längsverstelleinheit nach Anspruch 8,
**dadurch gekennzeichnet, dass** der U-förmige Haltebügel (50) in seinem waagerechten U-Schenkel (53) eine Öffnung (56) oder zumindest eine Einprägung oder Vertiefung für die Spindelmutter (12) aufweist.

10. Längsverstelleinheit nach einem der Ansprüche 1 bis 9,
**dadurch gekennzeichnet, dass** die Spindelmutter (12) eine ballige Außenkontur aufweist.

11. Längsverstelleinheit nach Anspruch 10,
**dadurch gekennzeichnet, dass** die ballige Spindelmutter (12) in die Öffnung (56) oder Aussparung des U-förmigen Haltebügels (50) hineinragt.

12. Längsverstelleinheit nach einem der Ansprüche 8 bis 11,
**dadurch gekennzeichnet, dass** der U-förmige Haltebügel (50) Stütznasen (57) aufweist, an denen sich die Spindelmutter (12) mit ihrer Stirnseite abstützen kann.

13. Längsverstelleinheit nach Anspruch 12,
**dadurch gekennzeichnet, dass** die Stütznasen (57) im Bereich des Überganges zwischen waagerechten U-Schenkel (53) und senkrechten Schenkeln (52) des U-förmigen Haltebügels (50) angeordnet sind.

14. Längsverstelleinheit nach Anspruch 12 oder 13,
**dadurch gekennzeichnet, dass** die Stütznasen (57) zur Innenseite des U-förmigen Haltebügels (50) weisen und durch Abkantung oder Verprägung des U-förmigen Haltebügels (50) gebildet sind.

15. Längsverstelleinheit nach einem der Ansprüche 1 bis 14,
**dadurch gekennzeichnet, dass** die Spindelmutter (12) Lagerbunde (13) aufweist, welche in Öffnungen (25, 32) der Platten (21, 31) der beiden Gehäuseteile (20, 30) eingesteckt sind.

16. Längsverstelleinheit nach einem der Ansprüche 1 bis 15,
**dadurch gekennzeichnet, dass** die Spindelmutter (12) ohne Verwendung weiterer Elemente in Öffnungen (25, 32) der beiden Gehäuseteile (20, 30) gelagert ist.

17. Längsverstelleinheit nach einem der Ansprüche 1 bis 16,
**dadurch gekennzeichnet, dass** die Schnecke (14) ohne Verwendung weiterer Elemente in den beiden Gehäuseteilen (20, 30) gelagert ist.

18. Längsverstelleinheit nach einem der Ansprüche 1 bis 17,
**dadurch gekennzeichnet, dass** die beiden Gehäuseteile (20, 30) identisch ausgebildet sind.

19. Längsverstelleinheit nach einem der Ansprüche 1 bis 18,
**dadurch gekennzeichnet, dass** die beiden Gehäuseteile (20, 30) durch Nut-Federverbindungen (70, 72) gehalten ineinander gesteckt sind.

20. Längsverstelleinheit nach einem der Ansprüche 1 bis 19,
**dadurch gekennzeichnet, dass** die Spindel (10) einen Durchmesser von größer gleich 8 mm aufweist.

21. Längsverstelleinheit nach einem der Ansprüche 1 bis 20,
**dadurch gekennzeichnet, dass** die beiden Gehäuseteile (20, 30) aus einem gleitmodifizierten Kunststoff bestehen, insbesondere aus Silikon oder Teflon (eingetragene Marke).

## Claims

1. A longitudinal adjustment unit for a seat, in particular in a motor vehicle, with a spindle nut (12) which is capable of travelling on a spindle (10) and which is capable of being driven by a worm (14) with a bearing collar (15) on both sides, and with a housing (20, 30) receiving the worm (14) and the spindle (10), **characterized in that**
- the housing (20, 30) has two housing parts (20, 30) which consist of plastics material and which are capable of being inserted one into the other in the axial direction (X) of the spindle (10), and
- each housing part (20, 30) has a plate (21, 31) from which webs (22, 23, 24; 33) project on one side, wherein at least one of the housing parts (30) has at least one projecting web (33) which engages around a bearing collar (15) of the worm (14) by more than 180°.

2. A longitudinal adjustment unit according to claim 1, **characterized in that** the housing parts (20, 30) are permanently joined to each other.

3. A longitudinal adjustment unit according to claim 1, **characterized in that** the web (33) engaging around the at least one bearing collar (15) of the worm (14) has a curved recess (33b), the arc periphery of which is greater than 180°, wherein the recess (33b) terminates in opposed end wedges (33a).

4. A longitudinal adjustment unit according to claim 3, **characterized in that** the webs (33) of one housing part (30) engage in corresponding end wedge openings (26) and circular openings (27) of the other housing part (20).

5. A longitudinal adjustment unit according to any one of claims 1 to 4, **characterized in that** the two housing parts (20, 30) are joined to each other by ultrasonic welding or laser welding.

6. A longitudinal adjustment unit according to any one of claims 1 to 5, **characterized in that** the two housing parts (20, 30) are joined to each other by a clamping or snap connection.

7. A longitudinal adjustment unit according to any one of claims 1 to 6, **characterized in that** the two housing parts (20, 30) are joined to each other by adhesion.

8. A longitudinal adjustment unit according to any one of claims 1 to 7, **characterized in that** the housing with the two housing parts (20, 30) and a worm (14) and spindle (10) present therein is mounted in a U-shaped holding yoke (50).

9. A longitudinal adjustment unit according to claim 8, **characterized in that** in its horizontal U-arm (53) the U-shaped holding yoke (50) has an opening (56) or at least a recess or depression for the spindle nut (12).

10. A longitudinal adjustment unit according to any one of claims 1 to 9, **characterized in that** the spindle nut (12) has a convex external contour.

11. A longitudinal adjustment unit according to claim 10, **characterized in that** the convex spindle nut (12) projects into the opening (56) or recess of the U-shaped holding yoke (50).

12. A longitudinal adjustment unit according to any one of claims 8 to 11, **characterized in that** the U-shaped holding yoke (50) has support lugs (57) on which the end face of the spindle nut (12) can be supported.

13. A longitudinal adjustment unit according to claim 12, **characterized in that** the support lugs (57) are arranged in the region of the transition between [the] horizontal U-arm (53) and vertical arms (52) of the U-shaped holding yoke (50).

14. A longitudinal adjustment unit according to claim 12 or 13, **characterized in that** the support lugs (57) are directed towards the inside of the U-shaped holding yoke (50) and are formed by bending or embossing of the U-shaped holding yoke (50).

15. A longitudinal adjustment unit according to any one of claims 1 to 14, **characterized in that** the spindle nut (12) has bearing collars (13) which are inserted into openings (25, 32) in the plates (21, 31) of the two housing parts (20, 30).

16. A longitudinal adjustment unit according to any one of claims 1 to 15, **characterized in that** the spindle nut (12) is mounted in openings (25, 32) in the two housing parts (20, 30) without the use of further elements.

17. A longitudinal adjustment unit according to any one of claims 1 to 16, **characterized in that** the worm (14) is mounted in the two housing parts (20, 30) without the use of further elements.

18. A longitudinal adjustment unit according to any one of claims 1 to 17, **characterized in that** the two housing parts (20, 30) are designed identically.

19. A longitudinal adjustment unit according to any one of claims 1 to 18, **characterized in that** the two housing parts (20, 30) are inserted one into the other held by tongue-and-groove connections (70, 72).

20. A longitudinal adjustment unit according to any one of claims 1 to 19, **characterized in that** the spindle (10) has a diameter of greater [than or] equal to 8 mm.

21. A longitudinal adjustment unit according to any one of claims 1 to 20, **characterized in that** the two housing parts (20, 30) consist of a plastics material with modified sliding properties, in particular of silicone or Teflon (registered TM).

## Revendications

1. Unité de réglage longitudinale d'un siège, en particulier d'un siège de véhicule automobile comportant un écrou (12) pouvant être déplacé sur une tige (10) et qui peut être entrainé par une vis sans fin (14) munie de chaque côté d'un épaulement de palier (15) ainsi qu'un boitier en plusieurs parties (20, 30) qui reçoit la vis sans fin (14) et la tige (10),
**caractérisée en ce que** :
- le boitier (20, 30) comporte deux parties de boitier (20, 30) réalisées en matériau synthétique qui sont enfichables l'une dans l'autre dans la direction axiale (X) de la tige (10), et
- chaque partie de boitier (20, 30) comporte une plaque (21, 31) se prolongeant d'un côté par des barrettes (22, 23, 24, 33),
au moins l'une des parties de boitier (30) étant équipée d'au moins une barrette en saillie (33) qui entoure un épaulement de palier (15) de la vis sans fin (14) sur plus de 180°.

2. Unité de réglage longitudinale conforme à la revendication 1,
**caractérisée en ce que**
les partie de boitier (20, 30) sont reliées entre elles de façon permanente.

3. Unité de réglage longitudinale conforme à la revendication 1,
**caractérisée en ce que**
la barrette (33) entourant l'épaulement de palier (15) de la vis sans fin (14) comporte un évidement (33b) en forme d'arc dont la périphérie est supérieure à 180°, l'évidement (33b) se terminant par des coins d'extrémité (33a) situés à l'opposé.

4. Unité de réglage longitudinale conforme à la revendication 3,
**caractérisée en ce que**
les barrettes (33) de l'une des parties de boitier (30) viennent en prise dans des ouvertures en coin d'extrémité (26) et des ouvertures circulaires (27) de l'autre partie de boitier (20).

5. Unité de réglage longitudinale conforme à l'une des revendications 1 à 4,
**caractérisée en ce que**
les deux parties de boitier (20, 30) sont reliées entre elles par soudage aux ultrasons ou par soudage laser.

6. Unité de réglage longitudinale conforme à l'une des revendications 1 à 5,
**caractérisée en ce que**
les deux parties de boitier (20, 30) sont reliées entre elles par une liaison par serrage ou par une liaison par encliquetage.

7. Unité de réglage longitudinale conforme à l'une des revendications 1 à 6,
**caractérisée en ce que**
les deux parties de boitier (20, 30) sont reliées entre elles par collage.

8. Unité de réglage longitudinale conforme à l'une des revendications 1 à 7,
**caractérisée en ce que**
le boitier est monté dans un étrier de retenue (50) en forme de U avec les deux parties de boitier (20, 30) et la vis sans fin (14) et la tige (10) montées dans celles-ci.

9. Unité de réglage longitudinale conforme à la revendication 8,
**caractérisée en ce que**
l'étrier de retenue (50) en forme de U comporte, dans sa branche de U horizontale (53) une ouverture (56), ou au moins une empreinte ou un évidement de réception de l'écrou (12).

10. Unité de réglage longitudinale conforme à l'une des revendications 1 à 9,
**caractérisée en ce que**
l'écrou (12) présente un contour externe bombé.

11. Unité de réglage longitudinale conforme à la revendication 10,
**caractérisée en ce que**
l'écrou bombé (12) pénètre dans l'ouverture (56) ou dans l'évidement de l'étrier de retenue en forme de U (50).

12. Unité de réglage longitudinale conforme à l'une des revendications 8 à 11,
**caractérisée en ce que**
l'étrier de retenue en forme de U (50) comporte des talons d'appui (57) contre lesquels peut s'appuyer l'écrou (12) par sa face frontale.

13. Unité de réglage longitudinale conforme à la revendication 12,
**caractérisée en ce que**
les talons d'appui (57) sont situés dans la zone de transition entre la branche horizontale (53) et les branches verticales (52) de l'étrier de retenue en forme de U (50).

14. Unité de réglage longitudinale conforme à la revendication 12 ou 13,
**caractérisée en ce que**
les talons d'appui (57) sont tournés vers la face interne de l'étrier de retenue en forme de U (50) et sont formés par chanfreinage ou estampage de cet étrier de retenue en forme de U (50).

15. Unité de réglage longitudinale conforme à l'une des revendications 1 à 14,
**caractérisée en ce que**
l'écrou (12) comporte des épaulements palier (13) qui sont enfichées dans des ouvertures (25, 32) des plaques (21, 31) des deux parties de boitier (20, 30).

16. Unité de réglage longitudinale conforme à l'une des revendications 1 à 15,
**caractérisée en ce que**
l'écrou (12) est monté dans les ouvertures (25, 32) des deux parties de boitier (20, 30) sans utiliser d'autres éléments.

17. Unité de réglage longitudinale conforme à l'une des revendications 1 à 16,
**caractérisée en ce que**
la vis sans fin (14) est montée dans les deux parties de boitier (20, 30) sans utiliser d'autres éléments.

18. Unité de réglage longitudinale conforme à l'une des revendications 1 à 17,
**caractérisée en ce que**
les deux parties de boitier (20, 30) sont identiques.

19. Unité de réglage longitudinale conforme à l'une des revendications 1 à 18,
**caractérisée en ce que**
les deux parties de boitier (20, 30) sont maintenues enfichées l'une dans l'autre par des éléments de liaison (70, 72) à rainure et languette.

20. Unité de réglage longitudinale conforme à l'une des revendications 1 à 19,
**caractérisée en ce que**
la tige (10) a un diamètre supérieur ou égal à 8 mm.

21. Unité de réglage longitudinale conforme à l'une des revendications 1 à 20,
**caractérisée en ce que**
les deux parties de boitier (20, 30) sont réalisées en un matériau synthétique à glissement modifié en particulier en silicone ou en Téflon®.
